# EUROPEAN PATENT APPLICATION

(11) **EP 1 422 602 A1**
(43) Date of publication of application: **26.05.2004**
(21) Application number: 02765366.6
(22) Date of filing: 29.08.2002
(51) Int. Cl.: G06F 3/033, H01H 13/70

(54) **MOUNTING STRUCTURE FOR RE-PEELABLE TRANSPARENT TOUCH PANEL AND MOUNTING SHEET USED FOR IT**

(30) Priority: 30.08.2001 JP 2001262367
(71) Applicant: NISSHA PRINTING CO., LTD., Nakagyo-ku Kyoto-shi Kyoto 604-8551 (JP)
(72) Inventor: NISHIKAWA, Kazuhiro, Nissha Printing Co., Ltd., Kyoto-shi, Kyoto 604-8551 (JP); ASAKURA, Takeshi, Nissha Printing Co., Ltd., Kyoto-shi, Kyoto 604-8551 (JP)
(74) Representative: HOFFMANN - EITLE
(86) International application number: PCT/JP2002/008703
(87) International publication number: WO 2003/019347

(57) **Abstract**

A transparent sheet (2) for mounting that has an acrylic adhesive layer (6) laminated on one surface of a core (4) of plastic film and that has a silicone rubber sheet (7) laminated on a primer-treated surface (5) formed by primer treatment on the other surface is bonded overall onto a reverse face of a transparent touch panel (1) with the acrylic adhesive layer, and the transparent touch panel provided with the sheet for mounting is mounted on a front surface of the display (3).

## Description

### Technical Field

The present invention relates to a mounting structure of a repeelable transparent touch panel and a sheet for mounting for use in the same which allow the transparent touch panel to be mounted repeelably on a display.

### Background Art

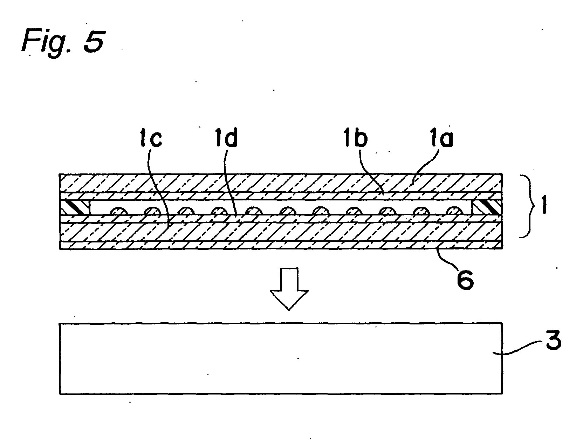

A transparent touch panel 1 has an upper electrode plate in which an upper electrode 1b composed of transparent conductive film has been formed on a lower surface of a film-like upper insulating substrate 1a and a lower electrode plate in which a lower electrode 1d composed of transparent conductive film has been formed on an upper surface of a plate-like or film-like lower insulating substrate 1c, has a structure in which the upper electrode plate and the lower electrode plate are positioned so as to face each other across an atmospheric layer between the electrodes, and is widely used as an input device mounted on portable electronic equipment having a display 3 such as cordless telephone, portable telephone, electronic calculator, sub-notebook personal computer, PDA (Personal Digital Assistant), digital camera, video camera, and equipment for service communications; monitors for personal computer; and the like. In a method of input therefrom, the transparent touch panel 1 is mounted on a front surface of the display 3 such as CRT (Cathode Ray Tube), LCD (Liquid Crystal Display), and organic ELD (Electro Luminescence Display), and various operations are subsequently executed by pressing a front surface of the transparent touch panel 1 with a pen, a finger, or the like while seeing a screen of the display 3 therethrough. In a mounting structure of a transparent touch panel that has conventionally been known well, as disclosed in Unexamined Japanese Patent Publication No. 61-131314, the transparent touch panel 1 having a transparent adhesive layer such as an acrylic adhesive layer 6 provided on a whole reverse face of the panel is mounted on the front surface of the display 3 (see Fig. 5).

The above-mentioned structure, however, causes issues when the transparent touch panel 1 is peeled off and remounted (hereinbelow, this operation will be referred to as "repair") by reasons such as contamination by dust and misregistration in mounting of the transparent touch panel 1 on the display 3. That is, an attempt to peel off the transparent touch panel 1 may cause the transparent adhesive layer 6 to separate inside the layer 6 and to be left on a side of the transparent touch panel 1 and on a side of the display 3, because the transparent adhesive layer 6 is bonded with equal tightness both to the transparent touch panel 1 and to the display 3, or may make film thicknesses uneven with stretch of part of the transparent adhesive layer 6, and therefore it has been difficult or impossible to make the repair.

As a solution to these issues, a means for mounting on the front surface of the display 3 the transparent touch panel 1 having transparent high polymer adhesive molded into a gel sheet and provided on the whole reverse face of the panel (see Fig. 3) has newly been devised and has been disclosed in Unexamined Japanese Patent Publication No. 10-222305. The gel sheet 8, having a uniform thickness under normal conditions, has a satisfactory wettability with an adherend and hardly causes air bubbles when the transparent touch panel 1 and the display 3 are stuck together. The gel sheet 8 is resistant to a separating force that acts vertically relative to a sheet surface of the gel sheet 8 and to a shifting force in transverse directions along the sheet surface, and has a characteristic in that the sheet is easily separated from an adherend by a separating force acting so as to tuck up the sheet from an end part thereof, so that the transparent touch panel 1 has no danger of coming off in a normal use state after mounted and so that the transparent touch panel 1 can easily be peeled off in the repair.

In the mounting structure of the transparent touch panel with use of the gel sheet 8, however, there still remain such issues as follows.

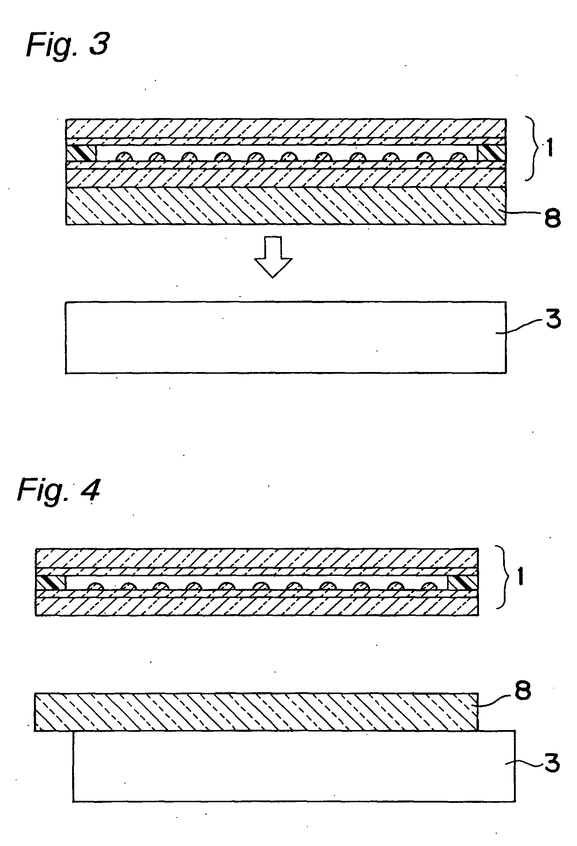

That is, both surfaces of the gel sheet 8 on a side of the transparent touch panel 1 and on a side of the display 3 have equal peelability, so that it is impossible to control whether the gel sheet 8 will be left on the side of the transparent touch panel 1 or on the side of the display 3 in the repair. Accordingly, the gel sheet 8 that was provided on the reverse face of the transparent touch panel 1 before mounting may be transferred to the side of the display 3 when the transparent touch panel 1 is peeled off (see Fig. 4), and then only the gel sheet 8 has to be peeled additionally from the display 3 for accomplishment of the repair. This is troublesome and makes it difficult to reuse the gel sheet 8 because peeling the gel sheet 8 alone causes deformation of the gel sheet 8.

On condition that the transparent touch panel 1 is peeled off after long-time exposure to high-temperature environment, the gel sheet 8 separates inside the layer to be left both on the side of the transparent touch panel 1 and on the side of the display 3 in the same manner as the mounting with use of the transparent adhesive layer 6 in Fig. 5.

On condition that the gel sheet 8 is provided on a reverse face of a large-sized panel from which a number of transparent touch panels 1 are to be obtained and is thereafter stamped out together with each transparent touch panel 1, it is difficult to perform accurate stamping into a specified shape because infirmness of the gel sheet 8 having no core and, moreover, the gel sheet 8 may protrude from a circumference of each transparent touch panel 1 obtained by the stamping because the gel sheet 8 is not bonded to the transparent touch panel 1. That is, a yield rate is decreased.

An object of the present invention is therefore to solve the above-mentioned issues and to provide a mounting structure of a repeelable transparent touch panel and a sheet for mounting for use in the same that are free from the transfer or separation of the gel sheet in the repair and that provide a satisfactory yield rate on condition that the gel sheet is provided on a reverse face of a large-sized panel from which a number of transparent touch panels are to be obtained and is thereafter stamped out together with each transparent touch panel.

### Disclosure Of Invention

For achievement of the above object, the present invention is constructed as follows.

According to a first aspect of the present invention, there is provided a mounting structure of a repeelable transparent touch panel
in which a transparent sheet for mounting comprises: a core of plastic film; an acrylic adhesive layer that is laminated on one surface of the core to configure either one of an adhesive surface on a side of the transparent touch panel and an adhesive surface on a side of a display; a primer-treated surface formed by primer treatment on the other surface of the core; and a silicone rubber sheet that is laminated on the primer-treated surface to configure, as a repeelable surface, the other of the adhesive surface on the side of the transparent touch panel and the adhesive surface on the side of the display, and
in which the adhesive surface of the sheet for mounting on the side of the transparent touch panel is bonded onto a reverse face of the transparent touch panel and the adhesive surface of the sheet for mounting on the side of the display is bonded onto a front surface of the display so that the transparent touch panel is mounted repeelably on the front surface of the display.

According to a second aspect of the present invention, there is provided a mounting structure of a repeelable transparent touch panel as defined in the first aspect, wherein a thickness of the silicone rubber sheet is. in a range of from 20 to 100 µm.

According to a third aspect of the present invention, there is provided a mounting structure of a repeelable transparent touch panel as defined in the first or second aspect, wherein a thickness of the core is not smaller than 12 µm.

According to a fourth aspect of the present invention, there is provided a mounting structure of a repeelable transparent touch panel as defined in the first or second aspect, wherein a thickness of the acrylic adhesive layer is in a range of from 10 to 50 µm.

According to a fifth aspect of the present invention, there is provided a transparent sheet for mounting a repeelable transparent touch panel, by which the transparent touch panel is mounted repeelably on a front surface of the display, with an adhesive surface on a side of the transparent touch panel bonded onto a reverse face of the transparent touch panel and with an adhesive surface on a side of the display bonded onto the front surface of the display,
the transparent sheet comprising:
a core of plastic film;
   an acrylic adhesive layer that is laminated on one surface of the core to configure either one of the adhesive surface on the side of the transparent touch panel and the adhesive surface on the side of the display;
a primer-treated surface formed by primer treatment on the other surface of the core; and
a silicone rubber sheet that is laminated on the primer-treated surface to configure, as a repeelable surface, the other of the adhesive surface on the side of the transparent touch panel and the adhesive surface on the side of the display.

According to a sixth aspect of the present invention, there is provided a transparent sheet for mounting a repeelable transparent touch panel, as defined in the fifth aspect, wherein a thickness of the silicone rubber sheet is in a range of from 20 to 100 µm.

According to a seventh aspect of the present invention, there is provided a transparent sheet for mounting a repeelable transparent touch panel, as defined in the fifth or sixth aspect, wherein a thickness of the core is not smaller than 12 µm.

According to an eighth aspect of the present invention, there is provided a transparent sheet for mounting a repeelable transparent touch panel, as defined in the fifth or sixth aspect, wherein a thickness of the acrylic adhesive layer is in a range of from 10 to 50 µm.

### Brief Description Of Drawings

These and other aspects and features of the present invention will become clear from the following description taken in conjunction with the preferred embodiments thereof with reference to the accompanying drawings, in which:
Fig. 1 is a sectional view illustrating a mounting structure of a repeelable transparent touch panel in accordance with a first embodiment of the present invention;
Fig. 2 is a sectional view illustrating a mounting structure of a repeelable transparent touch panel in accordance with a second embodiment of' the present invention;
Fig. 3 is a sectional view illustrating a conventional mounting structure of a repeelable transparent touch panel;
Fig. 4 is a sectional view illustrating a state in which the transparent touch panel has been peeled off after mounting with use of the structure of Fig. 3;
Fig. 5 is a sectional view illustrating a conventional mounting structure of a transparent touch panel;
Fig. 6 is a plan view illustrating an icon sheet that configures a part of the transparent touch panel in the mounting structure of the repeelable transparent touch panel in accordance with the first embodiment of the present invention;
Fig. 7 is a sectional view illustrating the mounting structure of the repeelable transparent touch panel and the icon sheet in accordance with the first embodiment;
Fig. 8 is a plan view illustrating an icon sheet that configures a part of a transparent touch panel in the mounting structure of the repeelable transparent touch panel in accordance with the first embodiment of the present invention;
Fig. 9 is a sectional view illustrating the mounting structure of the repeelable transparent touch panel and the icon sheet in accordance with the first embodiment;
Fig. 10 is a sectional view illustrating the mounting structure of a repeelable transparent touch panel and an icon sheet that configures a part of the transparent touch panel in accordance with the first embodiment;
Fig. 11 is a schematic explanatory view of a mounting example 1 of the mounting structure of the repeelable transparent touch panel and the icon sheet in accordance with the embodiment;
Fig. 12 is a schematic explanatory view of a mounting example 2 of the mounting structure of the repeelable transparent touch panel and the icon sheet in accordance with the embodiment;
Fig. 13 is a schematic explanatory view of a mounting example 3 of the mounting structure of the repeelable transparent touch panel and the icon sheet in accordance with the embodiment;
Fig. 14 is a schematic explanatory view of a mounting example 4 of the mounting structure of the repeelable transparent touch panel and the icon sheet in accordance with the embodiment;
Fig. 15 is a schematic explanatory view of a mounting example 5 of the mounting structure of the repeelable transparent touch panel and the icon sheet in accordance with the embodiment;
Fig. 16 is a schematic explanatory view of a mounting example 6 of the mounting structure of the repeelable transparent touch panel and the icon sheet in accordance with the embodiment;
Fig. 17 is a schematic explanatory view of a mounting example 7 of the mounting structure of the repeelable transparent touch panel and a buffer plate in accordance with the embodiment;
Fig. 18 is a schematic explanatory view of a mounting example 8 of the mounting structure of the repeelable transparent touch panel and the buffer plate in accordance with the embodiment;
Fig. 19 is a schematic explanatory view of a mounting example 9 of the mounting structure of the repeelable transparent touch panel and the buffer plate in accordance with the embodiment; and
Fig. 20 is a schematic explanatory view of a mounting example 10 of the mounting structure of the repeelable transparent touch panel and the buffer plate in accordance with the embodiment.

### Best Mode for Carrying Out the Invention

Before the description of the present invention proceeds, it is to be noted that like parts are designated by like reference numerals throughout the accompanying drawings.

Hereinbelow, first and second embodiments of the present invention will be described in detail with reference to the drawings.

### (First and Second Embodiments)

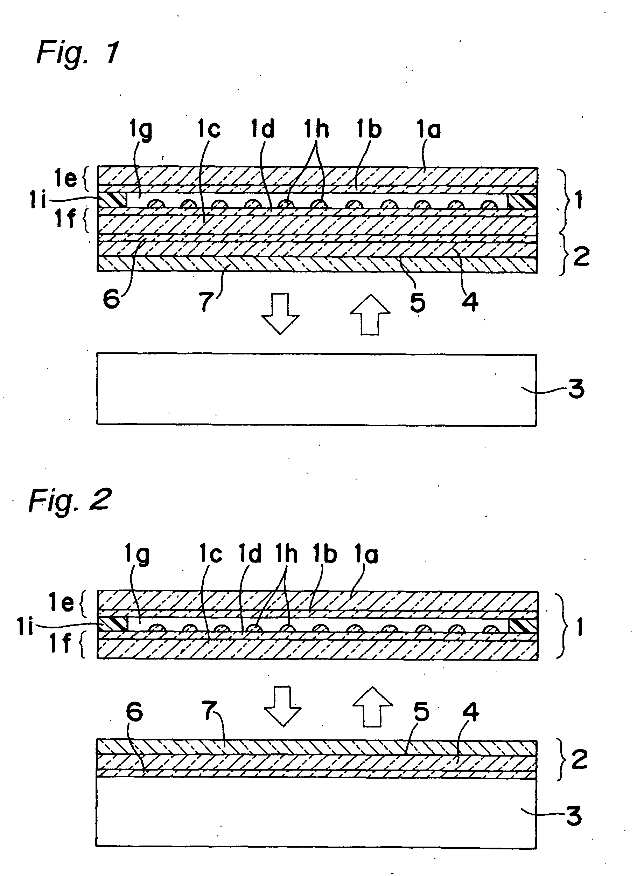

Fig. 1 is a sectional view illustrating a mounting structure of a repeelable transparent touch panel in accordance with the first embodiment of the present invention, and Fig. 2 is a sectional view illustrating a mounting structure of a repeelable transparent touch panel in accordance with the second embodiment of the present invention. In the drawings, reference numeral 1 denotes a transparent touch panel, numeral 2 denotes a sheet for mounting, numeral 3 denotes a display, numeral 4 denotes a transparent core, numeral 5 denotes a primer-treated surface of the core 4, numeral 6 denotes an acrylic adhesive layer that configures an adhesive surface on the side of the transparent touch panel, and numeral 7 denotes a silicone rubber sheet that configures an adhesive surface on the side of the display.

The transparent touch panel 1 has an upper electrode plate 1e in which an upper electrode 1b composed of a transparent conductive film has been formed on a lower surface of a film-like upper insulating substrate 1a and a lower electrode plate 1f in which a lower electrode 1d composed of a transparent conductive film has been formed on an upper surface of a plate-like or film-like lower insulating substrate 1c, and has a structure in which the upper electrode plate 1e and the lower electrode plate 1f are arranged so as to face each other via an atmospheric layer 1g between the electrodes 1b and 1d. Reference character 1h denotes dot spacers and character 1i denotes a spacer doubling as a bonding layer.

The display 3 represents a display of an input device of electronic equipment (more specifically, a display such as CRT, LCD, and organic ELD) including a display of portable electronic equipment such as cordless telephone, portable telephone, electronic calculator, sub-notebook personal computer, PDA (Personal Digital Assistant), digital camera, video camera, and equipment for service communications; and a monitor for personal computer. The transparent touch panel 1 is mounted on a front surface of the display 3 and, subsequently, pressing a front surface of the transparent touch panel 1 with a pen, a finger, or the like while seeing a screen of the display 3 therethrough brings the upper electrode 1b and the lower electrode 1d into contact with each other so that various input operations as an input device are carried out.

In the mounting structure of the repeelable transparent touch panel of the first embodiment shown in Fig. 1, the acrylic adhesive layer 6 is laminated on one surface of a plastic film that is to be the core 4, the primer-treated surface 5 is formed by primer treatment on the other surface, the transparent sheet 2 for mounting that has the silicone rubber sheet 7 laminated on the primer-treated surface 5 is bonded onto a whole reverse face (in other words, a surface on the display side, in this embodiment) of the transparent touch panel 1 with the acrylic adhesive layer 6, and the transparent touch panel 1 provided with the sheet 2 for mounting is mounted on the front surface of the display 3 so that the silicone rubber sheet 7 of the sheet 2 for mounting comes into contact with the whole front surface of the display 3. An overall thickness of the sheet 2 for mounting is preferably not more than 100 µm in terms of decrease in thickness of the input device. The sheet 2 for mounting is not limited to the sheet that is bonded onto the whole reverse face of the transparent touch panel 1 with the acrylic adhesive layer 6 but may be bonded partially onto the reverse face of the transparent touch panel 1.

The plastic film that is to be the core 4 of the sheet 2 for mounting supports the acrylic adhesive layer 6 and the silicone' rubber sheet 7. On condition that the sheet 2 for mounting is provided on a reverse face of a large-sized panel (for example, a 500 mm by 500 mm panel from which twenty-five transparent touch panels 1 each measuring 100 mm by 100 mm can be stamped out) from which a number of transparent touch panels 1 are to be obtained and is thereafter stamped out together with each transparent touch panel 1, the firmness of the sheet 2 for mounting is increased and therefore the sheet 2 for mounting can accurately be stamped together with each transparent touch panel 1 into a specified shape. Provision of the primer-treated surface 5 on the other surface of the plastic film 4 ensures tight adhesion to the silicone rubber sheet 7, so that the silicone rubber sheet 7 of the sheet 2 for mounting can be restrained from protruding from a circumference of each transparent touch panel 1 obtained by the stamping-out. In order not to deteriorate visibility of the display 3, the core 4 preferably has an excellent transparency, i.e., a total light transmittance not lower than 88 % (JIS-K7105-1981) and a haze value not higher than 3 % (JIS-K7105-1981). The core 4 preferably has a tensile elongation (JIS-K7127-1989) not smaller than 50 %, which represents an excellent stamping quality, and, as the core satisfying both the conditions, transparent and optically isotropic film may be used such as PET (polyethylene terephthalate), PC (polycarbonate), TAC (triacetylcellulose), and PES (polyester sulfone).

A thickness of the plastic film that is to be the core 4 is preferably 12 µm or larger. With the thickness smaller than 12 µm, the core 4 waves in formation of coating and it is therefore difficult to control thicknesses of the coating uniformly, so that the surface of the silicone rubber sheet 7 on the display side is made uneven and air bubbles are prone to arise from air caught on occasion of the mounting of the transparent touch panel 1. The thickness smaller than 12 µm also leads to the infirmness.

The primer treatment generally involves such treatment as application of intermediate agent congenial to both base material and coating, for purpose of improving adhesive property between the base material and the coating. In a broad sense, the treatment is easy adhesion treatment and includes improvement in adhesive property by increase in surface area by provision of unevenness on a surface of the base material and improvement in adhesive property by surface reforming with corona treatment or the like. In the sheet 2 for mounting of the embodiment of the present invention, the primer treatment allows the silicone rubber sheet 7 to be bonded tightly onto the core 4, prevents separation between the core 4 and the silicone rubber sheet 7 when the transparent touch panel 1 is peeled off, and prevents misregistration between the core 4 and the silicone rubber sheet 7 and protrusion of the silicone rubber sheet 7 on occasion of the stamp.

The acrylic adhesive layer 6 of the sheet 2 for mounting is an adhesive tape or the like coated with adhesive for general usage. The acrylic adhesive layer 6 is not only resistant to separating force acting vertically relative to the surface. of the sheet 2 for mounting that has the acrylic adhesive layer 6 formed thereon and to shifting force in transverse directions along the surface having the acrylic adhesive layer formed thereon, but also has a large adhesive strength such that the sheet 2 for mounting and an adherend (such as the display 3) onto which the sheet 2 for mounting has been bonded with the acrylic adhesive layer 6 cannot easily be separated even if a separating force between the sheet 2 for mounting and the adherend is exerted so as to tuck up the sheet from an end part thereof.

A thickness of the acrylic adhesive layer 6 is preferably in a range from 10 to 50 µm. The thickness smaller than 10 µm weakens the adhesive strength and makes it difficult to control whether the sheet 2 for mounting will be left on the side of the transparent touch panel 1 or on the side of the display 3 in the repair. The thickness larger than 50 µm makes the adhesive strength too large, on the contrary, and makes it difficult to remove air bubbles even if defoaming process is performed on air bubbles that occur or have occurred between the layer and the adherend, e.g., even if the sheet 2 for mounting is pressed with a roller or the like while being roundly bent so that the air bubbles are expelled gradually from an end or even by placement in reduced-pressure atmosphere.

Though the silicone rubber sheet 7 of the sheet 2 for mounting is resistant to separating force acting vertically from the adherend with respect to the surface (the primer-treated surface 5) on which the silicone rubber sheet has been placed and to shifting force in transverse directions along the surface, the sheet 2 for mounting and the adherend are easily separated when a force separating the sheet 2 for mounting and the adherend onto which the sheet 2 for mounting has been bonded by the silicone rubber sheet 7 is. exerted so as to tuck up the sheet from an end part thereof. In the repair, accordingly, the sheet 2 for mounting is easily peeled at the surface on the side of the silicone rubber sheet 7 because bonding of the sheet 2 for mounting is tight on the side of the acrylic adhesive layer 6, as described above. Besides, the sheet 2 for mounting is prevented from separating inside the layer and being left both on the side of the transparent touch panel 1 and on the side of the display 3 in the repair after long-time exposure to high-temperature environment. As material of the silicone rubber sheet 7, a silicone rubber sheet that is used as shock absorber and the like may be used. As the silicone rubber sheet 7, for example, there may be used a mixture of silicone rubber and silicone resin that has been made into ink with solvent, applied, and crosslinked by heat in drying or the like.

Fixing force exerted by the silicone rubber sheet 7 of the sheet 2 for mounting is not reduced by repeated attachment and detachment.

A thickness of the silicone rubber sheet 7 is preferably in a range from 20 to 100 µm. The thickness of the silicone rubber sheet 7 larger than 100 µm makes the adhesive strength too large and makes it difficult to peel at the surface of the sheet 2 for mounting on the side of the silicone rubber sheet 7 when the transparent touch panel 1 is pulled off. The silicone rubber sheet 7 with a thickness smaller than 20 µm that is bonded onto an adherend such as the display 3 has some areas that are not bonded but rise and thereby peels too much easily (i.e., more easily than required). Therefore, the silicone rubber sheet 7 with a thickness not smaller than 20 µm resists having areas that rise when bonded, therefore does not peel too much easily, and has sufficient elasticity to be a shock absorber, which is capable of protecting the display 3 from various types of shock and deformation.

For the application in manufacture of the sheet 2 for mounting, that is, the application of coating in the primer treatment, the application of acrylic adhesive in the formation of the acrylic adhesive layer 6, the application in the formation of the silicone rubber sheet 7, and the like, there are used conventional coating processes such as gravure coating, reverse coating, comma coating, or die coating.

In accordance with the first embodiment, the acrylic adhesive layer 6 is laminated on one surface of the core 4 of the plastic film, the transparent sheet 2 for mounting that has the silicone rubber sheet 7 laminated on the primer-treated surface 5 formed by primer treatment on the other surface is bonded onto a whole reverse face of the transparent touch panel 1 with the acrylic adhesive layer 6, and the transparent touch panel 1 provided with the sheet 2 for mounting can be mounted on the whole front surface of the display 3 so that the silicone rubber sheet 7 is repeelably bonded onto the display 3. In the repair, therefore, the sheet 2 for mounting is peeled faultlessly on the side of the silicone rubber sheet 7 in most cases, and the sheet 2 for mounting resists being transferred and being separated.

On condition that the sheet 2 for mounting is provided on a reverse face of a large-sized panel from which a number of transparent touch panels 1 are to be obtained and is thereafter stamped out together with each transparent touch panel 1 to be mounted, the sheet 2 for mounting, which has the core 4 and is bonded tightly onto the silicone rubber sheet 7, can accurately be stamped into a specified shape and the silicone rubber sheet 7 of the sheet 2 for mounting can be restrained from protruding from a circumference of each transparent touch panel 1 obtained by the stamp. In consequence, a satisfactory yield rate is obtained.

Though the mounting structure of the first embodiment shown in Fig. 1 has been described above, the present invention is not limited thereto but may be implemented in other various manners.

In the sheet for mounting in accordance with the second embodiment of the present invention, for example, the sheet for mounting in accordance with the first embodiment is positioned upside down in Fig. 1, i.e., the silicone rubber sheet 7 is used so as to be the adhesive surface on the side of the transparent touch panel and the acrylic adhesive layer 6 is used so as to be the adhesive surface on the side of the display. That is to say, as shown in Fig. 2, the above-described transparent sheet 2 for mounting may be bonded overall onto the front surface of the display 3 with the acrylic adhesive layer 6 of the sheet and the transparent touch panel 1 may be mounted on the surface of the sheet 2 for mounting on the display 3. The sheet 2 for mounting is not limited to the sheet to be bonded overall onto the front surface of the display 3 with the acrylic adhesive layer 6 but may be bonded partially onto the front surface of the display 3.

In accordance with the second embodiment, the acrylic adhesive layer 6 is laminated on one surface of the core 4 of the plastic film, the transparent sheet 2 for mounting that has the silicone rubber sheet 7 laminated on the primer-treated surface 5 formed by primer treatment on the other surface is bonded overall onto the front surface of the display 3 with the acrylic adhesive layer 6, and the transparent touch panel 1 can be mounted on the whole front surface of the display 3 provided with the sheet 2 for mounting so that the silicone rubber sheet 7 is repeelably bonded onto the reverse face of the transparent touch panel 1. In the repair, therefore, the sheet 2 for mounting is peeled faultlessly on the side of the silicone rubber sheet 7 in most cases, and the sheet 2 for mounting resists being transferred and being separated.

### (Working Example 1) (working example relating to the first embodiment)

A transparent polyester film 38 µm thick, 1050 mm wide, 500 mm long was used as the core, surface reforming was performed on one surface thereof by corona discharge, a silicone rubber sheet of 40 µm in thickness is laminated thereon by a coater, and a polyester film on which release treatment had been performed was laminated as a separator on a front surface of the sheet. Subsequently, an acrylic adhesive layer of 30 µm in thickness is laminated on the other surface of the core by the coater, a polyester film on which release treatment had been performed was laminated as a separator on a front surface of the layer, and thus the transparent sheet for mounting was obtained that had the separators provided on both the surfaces thereof. After that, the sheet from which the separator on the side of the acrylic adhesive layer had been peeled off was stuck on a whole reverse face of a large-sized panel from which a number of transparent touch panels are to be obtained, and stamping was performed by a blade form into a size of each transparent touch panel that was 70 mm in width and 90 mm in length. Lastly, the remaining separator was peeled off and a transparent touch panel was thereafter stuck on a whole front surface of an LCD.

### (Working Example 2) (working example relating to the second embodiment)

A sheet for mounting was used that measured 70 mm in width by 90 mm in length and that had separators, the sheet from which a separator on a side of an acrylic adhesive layer had been peeled off was stuck on a whole front surface of an LCD, the remaining separator was thereafter peeled off, and a transparent touch panel was stuck thereon. Other conditions were same as the Working Example 1.

### (Comparison example 1)

A commercially available gel sheet was used that was gelled transparent acrylic polymer adhesive of 200 µm in thickness and that had separators on both surfaces thereof, and the sheet from which the separator on one side had been peeled off was stuck on a whole reverse face of a large-sized panel from which a number of transparent touch panels are to be obtained. Other conditions were same as the Working Example 1.

### (Comparison example 2)

A commercially available gel sheet was used that was gelled transparent acrylic polymer adhesive of 200 µm in thickness and that had separators on both surfaces thereof, and the sheet from which the separator on one side had been peeled off was stuck on a whole front surface of an LCD. Other conditions were same as the Working Example 2.

In both the mounting structures of the Working Examples 1, 2 and of the Comparison examples 1, 2, the transparent touch panel and the display were not separated in normal service conditions but could easily be separated if the transparent touch panel was peeled from the display so as to be tucked up from an end part thereof in the repair. In the Working Examples 1 and 2, however, the sheet for mounting was separated at the surface on the side of the silicone rubber sheet at all times without being transferred. In the Comparison examples 1 and 2, by contrast, it was impossible to control whether the gel sheet would be left on the side of the transparent touch panel or on the side of the display in the repair, and the gel sheet was left on the side of the transparent touch panel four times and on the side of the display six times out of ten times. In the Comparison examples 1 and 2, twenty-four hours exposure to an environment of 70 °C caused the gel sheet to separate inside the layer and to be left both on the side of the transparent touch panel and on the side of the display.

The sheet for mounting of the Working Example 1 was formed so as to coincide with the shape of the transparent touch panel, whereas the gel sheet of the Comparison example 1 was not coincident with the shape of the transparent touch panel.

### (Working Example 3) (another working example relating to the first embodiment)

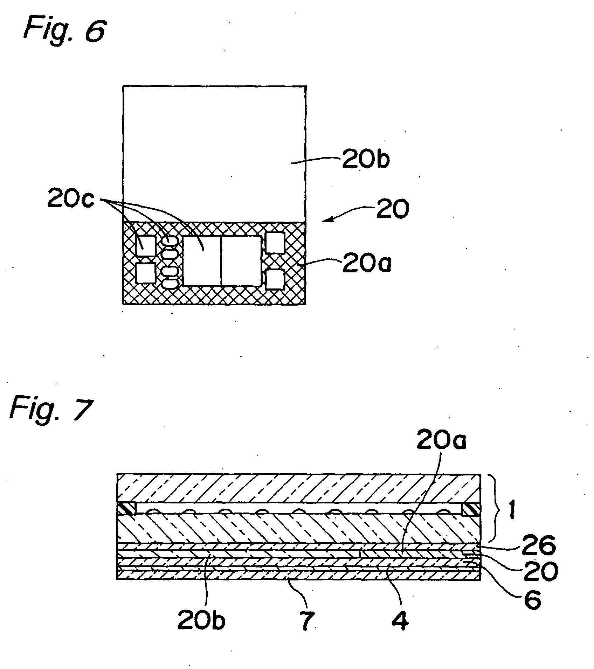

As another working example, a Working Example 3 of the sheet for mounting in accordance with the first embodiment of the present invention, as shown in Fig. 7, has a structure in which an icon sheet 20 is stuck overall between the reverse face of the transparent touch panel 1 and the sheet 2 for mounting with an acrylic adhesive layer 26 of acrylic adhesive. As shown in Fig. 6, the icon sheet 20 is a pattern sheet composed of a transparent section 20b and a pattern section 20a in which fixed-key forming sections 20c are represented, and is preferably a transparent film such as PET (polyethylene terephthalate) on which a pattern including fixed keys has been printed by screen printing or the like. The transparent touch panel 1 may include the icon sheet as a part of a configuration thereof.

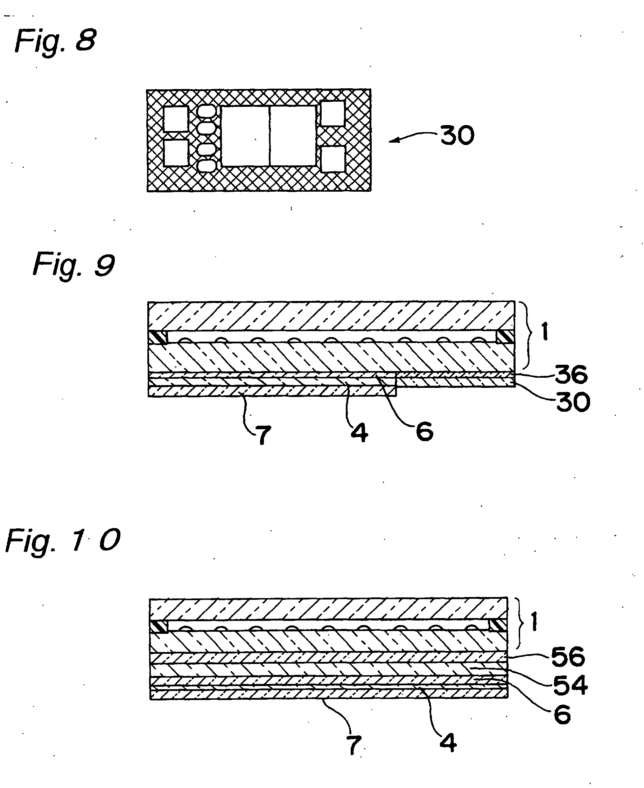

Forms of the icon sheet broadly fall into two types. One is, as shown in Fig. 8 for example, an icon sheet 30 composed only of a pattern section including fixed-key forming sections 20c. The other is, as shown in Fig. 6 for example, the icon sheet 20 having the transparent section in which keys can be changed freely according to images displayed on a screen, in addition to the pattern section including the fixed-key forming sections 20c. Though both the fixed-key forming sections 20c and the transparent section 20b have no pattern (plain) in a plan view of Fig. 6, the fixed-key forming sections 20c are supposed to be colored and to be included in the pattern section.

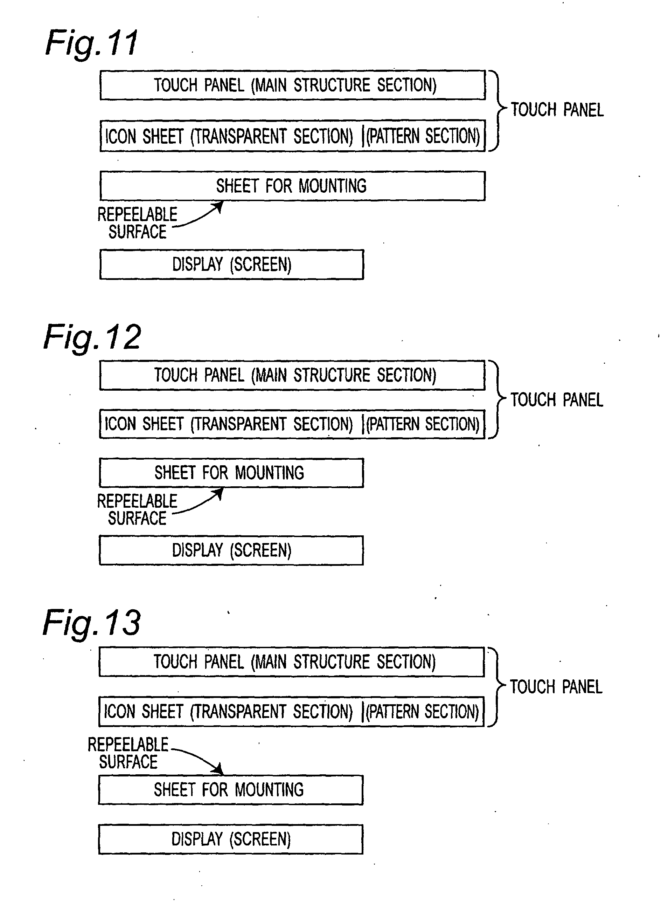

In a mounting example 1 with the icon sheet 20, as shown in Fig. 11, the icon sheet 20 having the transparent section and the pattern section is placed overall on a reverse face of a main structure section of a transparent touch panel 1, a sheet 2 for mounting that is overall on an undersurface of the icon sheet 20 is bonded and fixed onto and integrated with the transparent touch panel 1, and an adhesive surface of the sheet 2 for mounting on a display side is placed repeelably on a front surface of a display 3.

In a mounting example 2 with the icon sheet 20, as shown in Fig. 12, the icon sheet 20 having the transparent section and the pattern section' is placed overall on a reverse face of a main structure section of a transparent touch panel 1, a sheet 2 for mounting that is on an undersurface of the transparent section of the icon sheet 20 is bonded and fixed onto and integrated with the transparent touch panel 1, and an adhesive surface of the sheet 2 for mounting on a display side is repeelably placed on a front surface of a display 3.

In a mounting example 3 with the icon sheet 20, as shown in Fig. 13, the icon sheet 20 having the transparent section and the pattern section is placed overall on a reverse face of a main structure section of a transparent touch panel 1, and a sheet 2 for mounting is placed on the undersurface of the transparent section of the icon sheet 20. The.sheet 2 for mounting is bonded and fixed onto and integrated with a front surface of a display 3, and an adhesive surface of a silicone rubber sheet 7 of the sheet 2 for mounting on a side of the transparent touch panel is placed repeelably on the side of the transparent touch panel 1, i.e., on the transparent section of the icon sheet 20.

Though there is little difference in comparison among the mounting examples 1 through 3, in the mounting example 1 is a fear of air bubbles being left between the sheet 2 for mounting and the transparent touch panel 1. The reason for that is as follows: that is, printing of a pattern on a transparent film divides the icon sheet 20 into the transparent section and the pattern section formed by the printing of the pattern. Both in the case that the pattern is printed on a top surface of the transparent film and in the case that the pattern is printed on an undersurface of the transparent film, in this process, a difference in level is made between a printed portion and an unprinted portion, and covering the portions with the sheet for mounting may cause air bubbles to be left on the portions. In the mounting examples 2 and 3, by contrast, the sheet for mounting covers only the transparent section and is therefore prevented from covering a region that has the difference in level between the printed portion and the unprinted portion, so that there is no danger that air bubbles may be left in the region.

The following mounting examples 4 through 6 will be named as mounting examples composed only of the pattern section having a first fixed-key forming section as shown in Fig. 8.

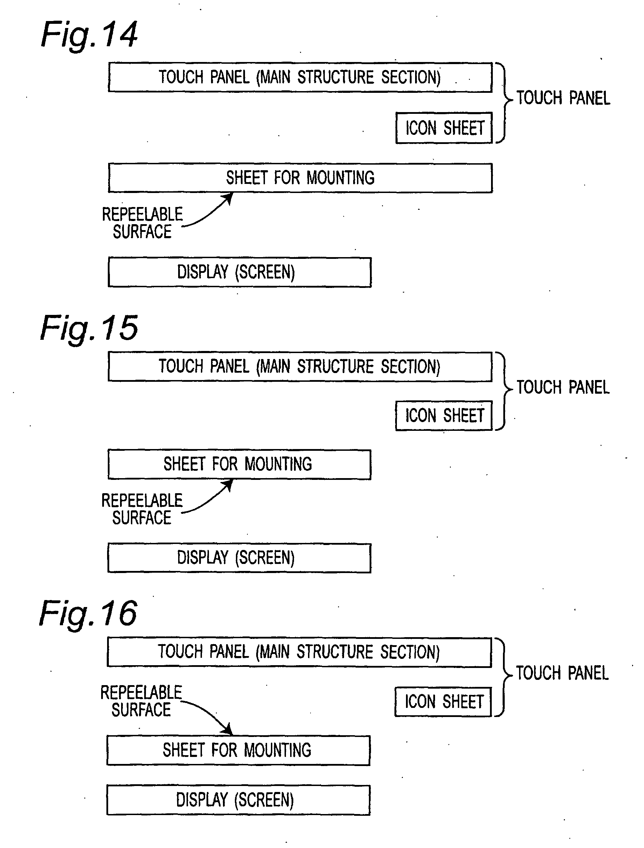

In the mounting example 4, as shown in Fig. 14, the icon sheet 30 is placed partially on a reverse face of a main structure section of a transparent touch panel 1, and a sheet 2 for mounting is bonded and fixed to and is thus integrated with the remaining portion of the reverse face of the main structure section of the transparent touch panel 1 and a reverse face of the icon sheet 30. A display side adhesive surface on a reverse side of the sheet 2 for mounting is placed repeelably on a front surface of a display 3.

In the mounting example 5, as shown in Fig. 9 and Fig. 15, the icon sheet 30 is placed on a part of a reverse face of a main structure section of a transparent touch panel 1, and a sheet 2 for mounting is bonded and fixed to and is thus integrated with the remaining portion of the reverse face of the main structure section of the transparent touch panel 1. A display side adhesive surface on a reverse face of the sheet 2 for mounting is placed repeelably on a front surface of a display 3. More specifically, as shown in Fig. 9, the sheet 2 for mounting is placed on major portion of the reverse face of the transparent touch panel 1 and the icon sheet 30 is placed on the remaining portion thereof. That is, the sheet 2 for mounting is placed with an acrylic adhesive layer 6 of the sheet 2 for mounting bonded onto the major portion of the reverse face of the transparent touch panel 1. On the other hand, the icon sheet 30 is bonded onto the remaining portion of the reverse face of the transparent touch panel 1 with an acrylic adhesive layer 36 of acrylic adhesive. The icon sheet 30 is similar to the icon sheet 20 of the Working Example 3.

In the mounting example 6, as shown in Fig. 16, the icon sheet 30 is placed on a part of a reverse face of a main structure section of a transparent touch panel 1, and a sheet 2 for mounting is placed repeelably on the remaining portion of the reverse face of the main structure section of the transparent touch panel 1. A display side adhesive surface on a reverse face of the sheet 2 for mounting is bonded and fixed to and is thus integrated with a front surface of a display 3.

In the mounting examples 5 and 6, in comparison among the mounting examples 4 through 6 and the above mounting examples 1 through 3, the icon sheet and the sheet for mounting are provided side by side, and there is a possibility that a gap may be formed conspicuously between the icon sheet and the sheet for mounting (transversely). In the mounting example 4, a difference in level is made between the portion with the icon sheet and the portion without the icon sheet, and there is a possibility that air bubbles may be left between the sheet for mounting and the transparent touch panel. The difference in level is larger than the formerly described difference in level between the printed portion and the unprinted portion, and thus causes air bubbles to be left to a greater degree than in the former specified examples. Therefore, the mounting examples 1 through 3 are more preferable than the mounting examples 4 through 6.

The transparent section 20b is an area in which positions and functions of keys can be changed freely according to images on the screen of the display 3. In contrast to that, the fixed-key forming sections 20c are areas in which positions and functions of keys are not changed according to images on the screen of the display 3 but keys with fixed positions and fixed functions are formed between the upper electrode 1b and the lower electrode 1d.

In a structure in which the display is an LCD, as shown in Fig. 10, a transparent buffer plate 54 may be stuck overall between the reverse face of the transparent touch panel 1 and the sheet 2 for mounting, with an acrylic adhesive layer 56 of acrylic adhesive. The buffer plate 54 may be mounted in any position between the reverse face of the transparent touch panel 1 and the front surface of the display 3. For the buffer plate 54 is used a plastic sheet such as PC (polycarbonate), PMMA (polymethyl methacrylate), PET (polyethylene terephthalate), and MS (methacrylstyrene copolymer); or glass. The buffer plate 54 is inserted for reducing blot of image'that occurs on occasion of input by pen, fingers, or the like in the case that the display 3 is an LCD, and the inserted buffer plate 54 diffuses a pressure incident to the input, so that a buffer mechanism can be achieved by the reduction in the pressure on the LCD display 3. A thickness of the buffer plate 54 is preferably on the order of 0.2 mm to 2 mm. That is because the thickness smaller than 0.2 mm causes the effect of pressure diffusion to be lost and because the thickness exceeding 2 mm causes deterioration in visibility on the display 3 because of parallax according to the thickness.

In accordance with the above configuration, the buffer plate 54 is inserted between the reverse face of the transparent touch panel 1 and the sheet 2 for mounting, therefore the pressure incident to the input by pen, fingers, or the like can be diffused by the buffer plate 54 in the case that the display 3 is an LCD, and thus the pressure exerted on the LCD display 3 can be reduced, so that such effects as the reduction in blot of image occurring on occasion of the input can be achieved.

As mounting examples including the buffer plate, mounting examples 7 through 10 will be described below.

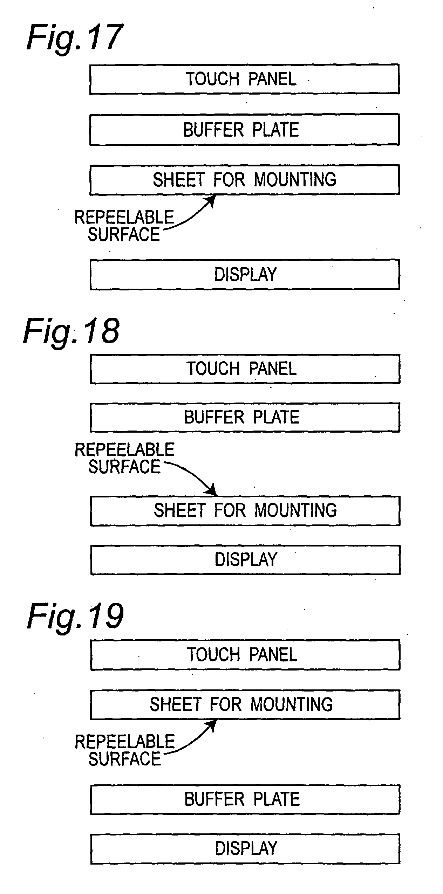

In a mounting example 7 with the buffer plate, as shown in Fig. 10 and Fig. 17, the buffer plate 54 is placed on a whole reverse face of a transparent touch panel 1, a sheet 2 for mounting is bonded and fixed onto and integrated with a whole undersurface of the buffer plate 54, and an adhesive surface on a display side of the sheet 2 for mounting is placed repeelably on a front surface of a display 3.

In a mounting example 8 with the buffer plate, as shown in Fig. 18, the buffer plate 54 is placed on a whole reverse face of a transparent touch panel 1, a sheet 2 for mounting is repeelably placed on the whole undersurface of the buffer plate 54, and an adhesive surface on a display side of the sheet 2 for mounting is bonded and fixed onto and integrated with a front surface of a display 3.

In a mounting example 9 with the buffer plate, as shown in Fig. 19, a sheet 2 for mounting is bonded and fixed onto and integrated with a whole reverse face of a transparent touch panel 1, the buffer plate 54 is repeelably placed on a whole undersurface of the sheet 2 for mounting, and the buffer plate 54 is bonded and fixed onto and integrated with a front surface of a display 3.

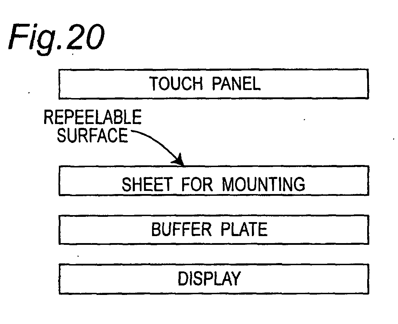

In a mounting example 10 with the buffer plate, as shown in Fig. 20, a sheet 2 for mounting is repeelably placed on a whole reverse face of a transparent touch panel 1, the buffer plate 54 is bonded and fixed onto and integrated with a whole undersurface of the sheet 2 for mounting, and the buffer plate 54 is bonded and fixed onto and integrated with a front surface of a display 3.

The mounting structures of the repeelable transparent touch panel of the present invention and the sheet for mounting for use in the same are composed of such a configuration as described above and therefore achieve such effects as will be described below.

That is, the transparent sheet for mounting having the acrylic adhesive layer laminated on one surface of the core of plastic film and having the silicone rubber sheet laminated on the primer-treated surface formed by primer treatment on the other surface is bonded overall or partially onto the reverse face of the transparent touch panel with the acrylic adhesive layer, and the transparent touch panel provided with the sheet for mounting is mounted on the front surface of the display. Otherwise, the sheet for mounting is bonded overall or partially onto the front surface of the display with the acrylic adhesive layer, and the transparent touch panel is mounted on the front surface of the sheet for mounting on the display. Therefore, the sheet for mounting is peeled faultlessly on the side of the silicone rubber sheet in most cases in the repair and resists being transferred and being separated.

On condition that the sheet for mounting provided on a reverse face of a large-sized panel from which a number of transparent touch panels are to be obtained is stamped out together with each transparent touch panel and is mounted, the sheet for mounting can accurately be stamped into a specified shape and the silicone rubber sheet of the sheet for mounting can be restrained from protruding from a circumference of each transparent touch panel obtained by the stamp, because the sheet for mounting has the core bonded tightly onto the silicone rubber sheet. Thus a satisfactory yield rate is achieved.

With the thickness of the silicone rubber sheet in a range of from 20 to 100 µm, the adhesive strength is prevented from being too large, so that the transparent touch panel, when being pulled off, is easily peeled at the surface of the sheet for mounting on the side of the silicone rubber sheet, the transparent touch panel, when being stuck onto the adherend, resists having areas that rise and thus does not peel too much easily, and the silicone rubber sheet has sufficient elasticity to be a shock absorber and is therefore capable of protecting the display from various manners of shock and deformation.

With the thickness of the core not smaller than 12 µm, the core is made sufficiently firm so that the core does not wave and is capable of keeping a uniform thickness when such a coating as the acrylic adhesive layer is formed on the core, the surface of the silicone rubber sheet on the display side is prevented from being uneven, and air bubbles are prevented from being prone to arise from air caught on occasion of the mounting of the transparent touch panel.

With the thickness of the acrylic adhesive layer in a range of from 10 to 50 µm, the adhesive strength is prevented from being weakened, so that it can easily be controlled whether the sheet for mounting will be left on the side of the transparent touch panel or on the side of the display in the repair (in other words, the sheet for mounting can easily be controlled so as to be left on the side of the acrylic adhesive layer without exception) and, on the other hand, the adhesive strength is prevented from being too large, so that air bubbles occurring or having occurred between the layer and the adherend can easily be expelled by defoaming process on the air bubbles.

By properly combining the arbitrary embodiments of the aforementioned various embodiments, the effects possessed by the embodiments can be produced.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A mounting structure of a repeelable transparent touch panel
in which a transparent sheet (2) for mounting comprises: a core (4) of plastic film; an acrylic adhesive layer (6) that is laminated on one surface of the core (4) to configure either one of an adhesive surface on a side of the transparent touch panel and an adhesive surface on a side of a display; a primer-treated surface (5) formed by primer treatment on the other surface of the core (4); and a silicone rubber sheet (7) that is laminated on the primer-treated surface (5) to configure, as a repeelable surface, the other of the adhesive surface on the side of the transparent touch panel and the adhesive surface on the side of the display, and
in which the adhesive surface of the sheet (2) for mounting on the side of the transparent touch panel is bonded onto a reverse face of the transparent touch panel (1) and the adhesive surface of the sheet (2) for mounting on the side of the display is bonded onto a front surface of the display (3) so that the transparent touch panel (1) is mounted repeelably on the front surface of the display (3).

2. A mounting structure of a repeelable transparent touch panel as claimed in claim 1, wherein a thickness of the silicone rubber sheet (7) is in a range of from 20 to 100 µm.

3. A mounting structure of a repeelable transparent touch panel as claimed in claim 1 or 2, wherein a thickness of the core (4) is not smaller than 12 µm.

4. A mounting structure of a repeelable transparent touch panel as claimed in claim 1 or 2, wherein a thickness of the acrylic adhesive layer (6) is in a range of from 10 to 50 µm.

5. A transparent sheet (2) for mounting a repeelable transparent touch panel, by which the transparent touch panel (1) is mounted repeelably on a front surface of the display (3), with an adhesive surface on a side of the transparent touch panel bonded onto a reverse face of the transparent touch panel (1) and with an adhesive surface on a side of the display bonded onto the front surface of the display (3),
the transparent sheet comprising:
a core (4) of plastic film;
an acrylic adhesive layer (6) that is laminated on one surface of the core (4) to configure either one of the adhesive surface on the side of the transparent touch panel and the adhesive surface on the side of the display;
a primer-treated surface (5) formed by primer treatment on the other surface of the core (4); and
a silicone rubber sheet (7) that is laminated on the primer-treated surface (5) to configure, as a repeelable surface, the other of the adhesive surface on the side of the transparent touch panel and the adhesive surface on the side of the display.

6. A transparent sheet for mounting a repeelable transparent touch panel, as claimed in claim 5, wherein a thickness of the silicone rubber sheet (7) is in a range of from 20 to 100 µm.

7. A transparent sheet for mounting a repeelable transparent touch panel, as claimed in claim 5 or 6, wherein a thickness of the core (4) is not smaller than 12 µm.

8. A transparent sheet for mounting a repeelable transparent touch panel, as claimed in claim 5 or 6, wherein a thickness of the acrylic adhesive layer (6) is in a range of from 10 to 50 µm.
